# EUROPEAN PATENT APPLICATION

(11) **EP 4 759 506 A1**
(43) Date of publication of application: **17.06.2026**
(21) Application number: 25220974.7
(22) Date of filing: 05.12.2025
(51) Int. Cl.: B29C 45/00, B29C 45/44, B29K 33/00, B29K 77/00, B29K 101/12, B29K 503/06, B29L 31/12, B29K 21/00, B29K 509/02

(54) **INJECTION MOULDING PROCESS FOR MAKING AN ITEM WITHOUT WELDS**

(30) Priority: 10.12.2024 IT 202400028050
(71) Applicant: Silcon Plastic S.r.l., 32012 Val di Zoldo (BL) (IT)
(72) Inventor: COSTANTIN, Virgilio, I-32012 Val di Zoldo, BELLUNO (IT)
(74) Representative: Zanettin, Gianluigi

(57) **Abstract**

The present invention concerns an injection moulding process for making an item without welds (1; 10) having at least two elements (1a, 1b; 10a, 10b) physically separated from each other, interconnected by means of two connection portions (2a, 2b; 12a, 12b) mutually interpenetrating and non-removable with respect to each other. Said process comprises the use of at least a first mould (100; 110) shaped to define with its own injection chamber (101) the volume corresponding to one of the two connection portions (2b; 12b), separating it with its own walls from the other connection portion (2a; 12a). Said first mould (100; 110) is made of a support material soluble in a solvent bath (400). The injection moulding provides for injecting at least into the injection chamber (101) of said first mould (100; 110) an injection material which is injectable at a temperature lower than the decomposition temperature of the material with which the first mould is made.

## Description

### FIELD OF APPLICATION

The subject of the present invention is an injection moulding process.

In particular, the process according to the invention can be used to make chains with closed links without welds.

### PRIOR ART

It is known to make chains with closed links without welds both in metal and in plastic material.

The need to avoid welds in the links is essentially due to:
- aesthetic reasons, particularly in the fashion sector; or
- mechanical strength reasons, in technical sectors which use chains in corrosive environments (for example, marine environments), where the welds - being more exposed to corrosion phenomena - can be preferential points for crack initiation.

Typically, as described for example in patents DE1194557 or FR2020827, in the case of chains both in metal and in plastic, half of the links of the chain to be produced are initially pre-moulded in a traditional way using any suitable technique. Subsequently, the missing links are moulded using special moulds, each of which is divided into four removable parts and positionable between two preformed links to define an injection chamber corresponding to the shape of a closed link that interconnects said two preformed links. The mould separates the preformed links from the interconnection link, avoiding welding between them.

The main limitation of such production process lies in the difficulties encountered in the assembly and removal by disassembly of the individual moulds and in the complexity of producing the moulds themselves. This limitation worsens as the size of the links decreases.

In general, the same problems arise in the moulding without welds of items having at least two elements physically separated from each other and interconnected by means of non-removable portions.

By non-removable portions it is meant in particular portions mutually interpenetrated, closed in a ring or open, defining at least one undercut.

There is therefore a need to provide an injection moulding process which makes it possible to overcome the aforementioned limitations of the current technology, simplifying both the production of the moulds and the operations of setting up and removing the same.

### DISCLOSURE OF THE INVENTION

Therefore, a main object of the present invention is to eliminate, wholly or in part, the drawbacks of the known technique mentioned above, by providing an injection moulding process which allows to make, in an operationally simpler way, items without welds having at least two elements physically separated from each other, interconnected by means of non-removable portions.

**A** further object of the present invention is to provide an injection moulding process which allows to make items without welds having at least two elements physically separated from each other, interconnected by means of non-removable portions, without requiring the use of complex moulds.

Another object of the present invention is to provide an injection moulding process which allows to make items without welds having at least two elements physically separated from each other, interconnected by means of non-removable portions, in a cost-effective manner to implement.

A further object of the present invention is to provide an injection moulding process which allows to make items without welds having at least two elements physically separated from each other, interconnected by means of non-removable portions, without requiring the use of equipment more complex than that of known type.

### BRIEF DESCRIPTION OF THE DRAWINGS

The technical features of the invention, according to the above-mentioned objects, are clearly findable from the content of the claims reported below and the advantages thereof will become more apparent in the detailed description that follows, made with reference to the accompanying drawings, which represent one or more purely exemplary and non-limiting embodiments thereof, wherein:
- Figure 1 shows a block diagram relating to a first form of implementation of the process according to the invention;

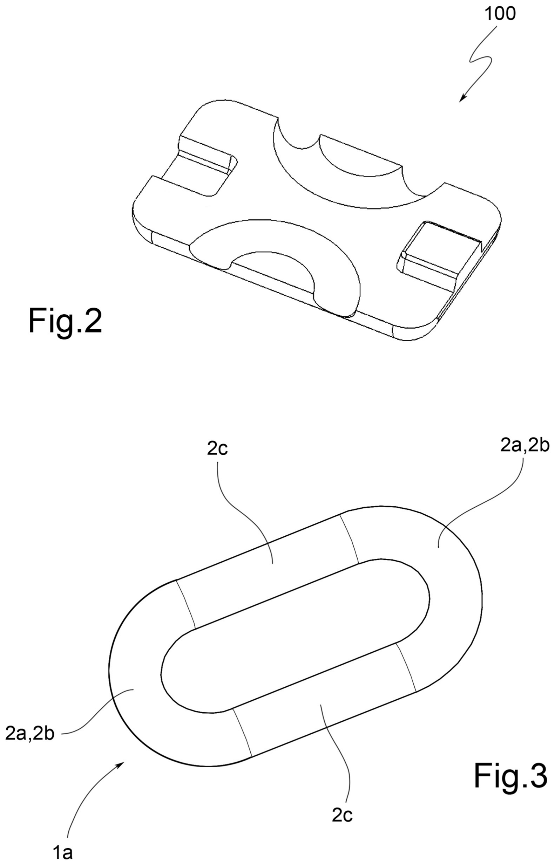

- Figure 2 shows a perspective view of one half of an example of a first mould used in the process according to the invention for moulding chains;
- Figure 3 shows a perspective view of an example of a pre-moulded link used in the process according to the invention for moulding chains;
- Figure 4 shows a perspective view of the coupling of two halves of an example of a first mould used in the process according to the invention for moulding chains;
- Figure 5 shows the coupling of the mould of figure 4 with the link of figure 3, provided for in a step of the process according to the invention for moulding chains;
- Figures 6 to 9 show some steps of the process according to the invention for moulding chains;
- Figure 10 shows a block diagram relating to a second form of implementation of the process according to the invention;
- Figures 11 to 14 show some steps of the process according to the invention in accordance with the diagram of figure 10 for moulding a buckle with corresponding pin.

### DETAILED DESCRIPTION

The injection moulding process according to the invention is structured to make an item without welds 1 or 10 having at least two elements 1a, 1b or 10a, 10b physically separated from each other, interconnected by means of two connection portions 2a, 2b or 12a, 12b mutually interpenetrating and non-removable with respect to each other.

The expression "non-removable portions with respect to each other" is intended to refer in particular to mutually interpenetrated portions, closed in a ring or open, defining at least one undercut.

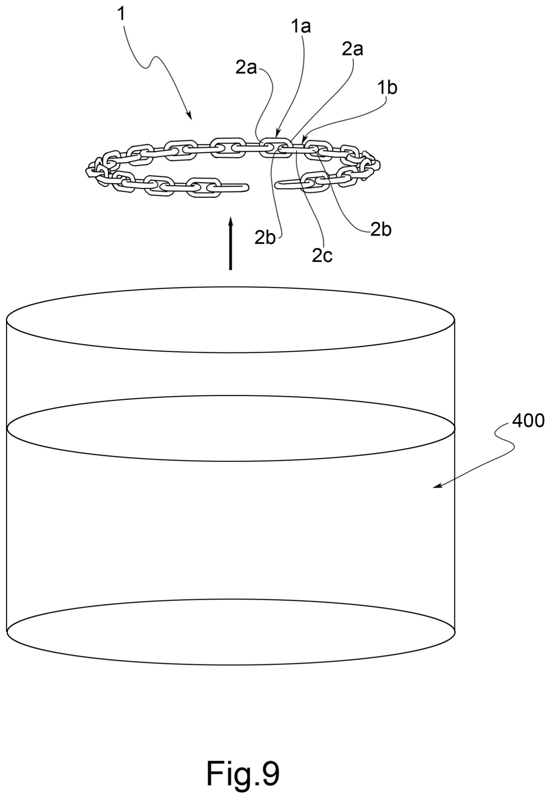

Advantageously, the item to be made may consist of an assembly of two or more elements interconnected with each other in sequence, preferably identical to each other. As illustrated in figure 9, an example of such item 1 consists of a chain with closed links without welds. In this case, the two connection portions 2a, 2b are constituted in particular by a portion 2a, 2b of a closed link 1a or 1b. Preferably, in the case of oblong links, the connection portion is constituted by one of the curved sections of the link.

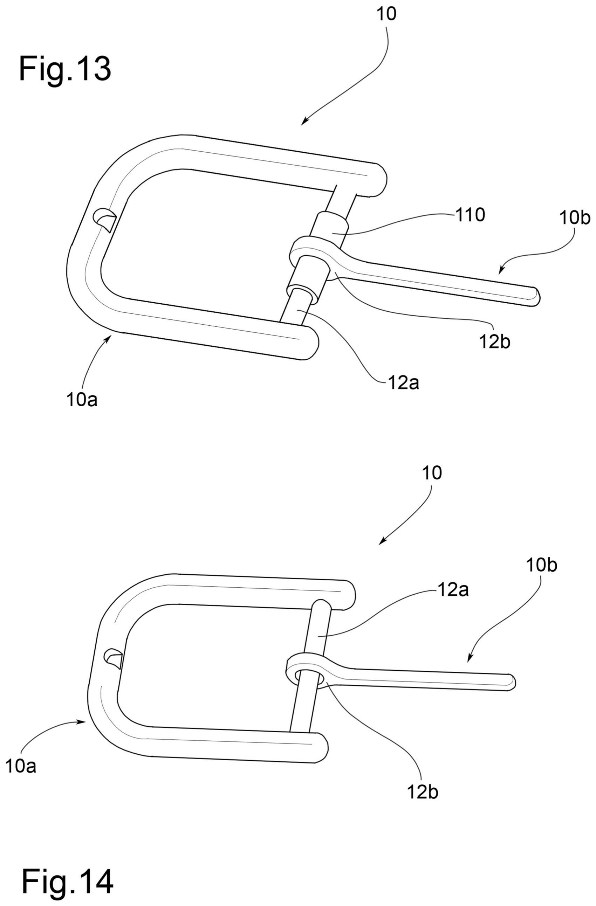

Advantageously, alternatively, the item to be made may consist of an assembly of only two elements interconnected with each other. As illustrated in figure 14, an example of such item 10 consists of a buckle 10a and corresponding pin 10b connected to each other without welds. In this case, the two connection portions 12a, 12b are constituted in particular by a portion of the buckle 12a intended to hold the pin and by the ring-shaped body 12b located at one end of the pin, at which the pin is connected to the buckle.

According to a general embodiment of the invention, the process comprises the use of at least a first mould 100 or 110 shaped to define with its own injection chamber 101 the volume corresponding to one of the two connection portions 2b or 12b, separating it with its own walls from the other connection portion 2a or 12a.

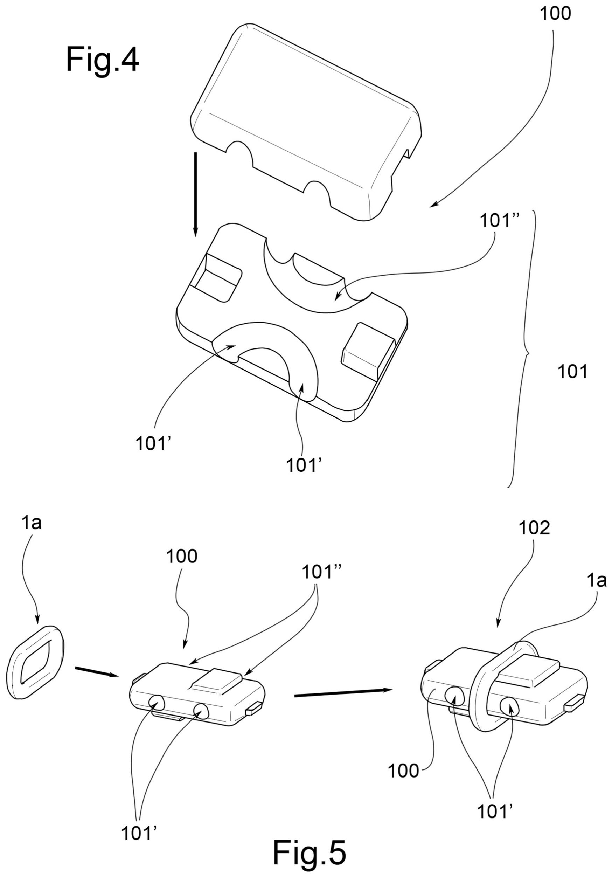

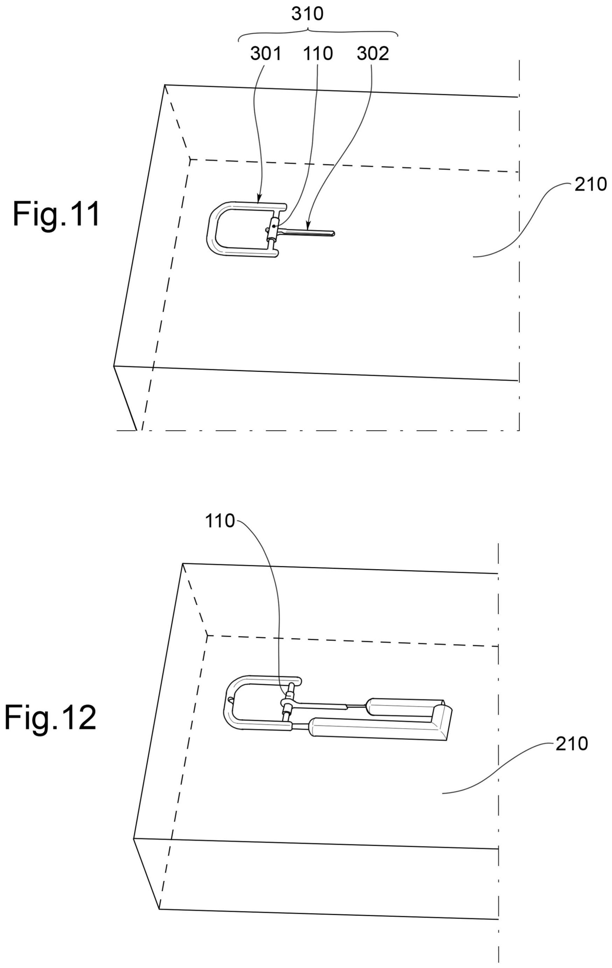

Said first mould 100 or 110 may be made in one piece, as illustrated in figure 11, or may be made by the combination of two or more pieces, as illustrated in figure 4.

The sizing and design of the first mould is within the capabilities of a person skilled in the art and depends on the characteristics of the item to be made. For this reason, no further detail will be given on this point.

According to a first essential aspect of the present invention, said first mould 100 or 110 is made of a support material soluble in a solvent bath.

Preferably, the support material with which the first mould 100 or 110 is made is water-soluble, and is preferably selected from the group consisting of formulations based on polyvinyl alcohol (PVA), polyethylene glycol (PEG) and polylactic acid (PLA).

According to a preferred embodiment, the support material is a material based on polyvinyl alcohol and is formulated to have a rapid solubility in cold water. The material has good resistance to weakly acidic or basic products and has been specifically developed for applications in the field of injection moulding.

According to a further essential aspect of the invention, the injection moulding provides for injecting at least into the injection chamber 101 of said first mould 100 or 110 an injection material which is injectable at a temperature lower than the decomposition temperature of the material with which the first mould is made.

By decomposition temperature it is meant the temperature (in particular melting or softening temperature) at which the support material begins to lose its mechanical strength and stability properties and thus its shape.

Generally, the above-listed support materials have decomposition temperatures higher than 200°C. In particular, the PVA-based support material has a decomposition temperature of about 230°C.

Advantageously, the injection moulding may include the injection of plastic material, preferably selected from the group consisting of rubbers, nylon, PMMA, polyesters having melting temperatures not higher than 200°C.

Alternatively, the injection moulding may include the injection of one or more polymers, such as those listed above, and one or more fillers, such as glass powders, leather powders, wood powders. In this case, said one or more polymers constitute the binder between the particles of said one or more fillers. The mixture of polymers and fillers is fluid and injectable even at room temperature.

Alternatively, the injection moulding may include:
- the injection of polymers and metal powders according to the metal injection moulding (MIM) technique; or
- the injection of polymers and ceramic powders according to the ceramic injection moulding (CIM) technique.

Both the MIM technique and the CIM technique are in themselves known to a person skilled in the art and will therefore not be described in detail. The advantage of these two techniques is the possibility of operating during the injection step at temperatures not higher than 200°C; thus, well below the decomposition temperature of the support materials of which the first mould is made.

In the case of injection moulding of plastic or polymers with fillers, the item obtained at the end of the removal of the first mould is a piece already corresponding to the finished item.

In the case of injection moulding using the MIM or CIM technique, the item obtained at the end of the removal of the first mould is a green piece which must be subjected to sintering, as will be discussed further below.

Thanks to the invention, it is possible by means of an injection moulding process to make - in an operationally simpler way - items without welds having at least two elements physically separated from each other, interconnected by means of non-removable portions.

In particular, the removal step of the first mould is greatly simplified, which in the prior art is quite laborious and lengthy especially in the case of items formed by a plurality of elements, such as chains. This operation is also delicate because the moulds, having to be reused, must be handled with care. Differently, in the process according to the invention, the first mould is sacrificial and the operation can be carried out quickly.

Moreover, thanks to the invention, the removal of the moulds by dissolution in solvent does not mechanically stress the moulded elements, thereby facilitating the moulding of small-sized items. Differently, in the prior art, the removal of the mould must be carried out with caution to avoid damage to the moulded piece.

In addition, since it is no longer necessary to disassemble the first mould, the latter is less complex and can be designed more simply.

Overall, the injection moulding process according to the invention allows to make items without welds having at least two elements physically separated from each other, interconnected by means of non-removable portions, in a more cost-effective manner to implement and without requiring the use of equipment more complex than that of known type.

Finally, especially for the making of items formed by a plurality of elements, such as chains for example, the process according to the invention is more easily automatable compared to known-type processes. This derives in particular from the ease and simplicity of the removal step of the first mould.

Advantageously, said at least two elements 1a, 1b or 10a, 10b forming the item to be made may be made by overmoulding the second element 1b onto the pre-moulded first element 1a.

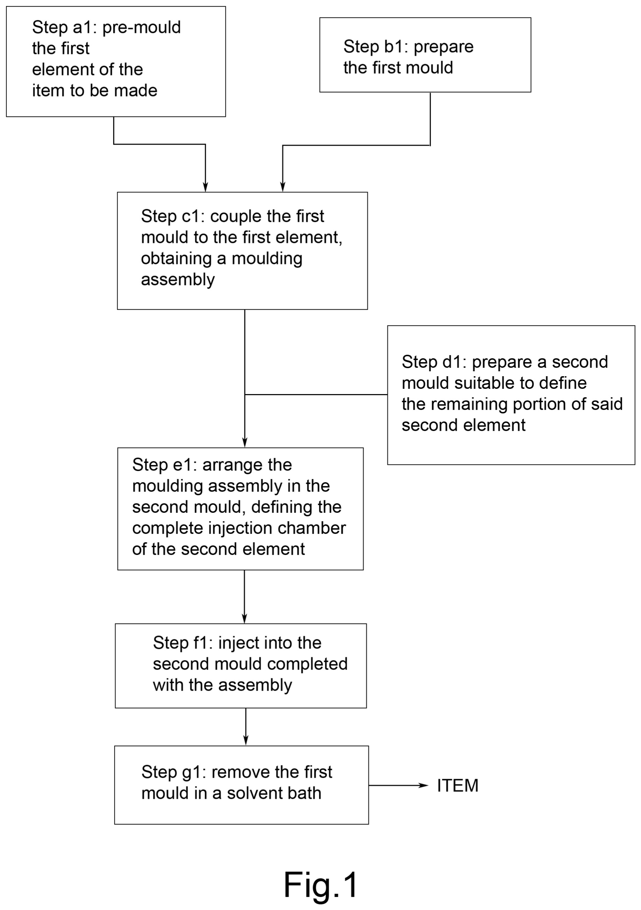

More in detail, with reference to the flow diagram of figure 1, the process may comprise the following operating steps:
- a1) pre-moulding a first element 1a of said item 1 to be made; such step can be carried out using any suitable production technique;
- b1) preparing said first mould 100;
- c1) coupling said first mould 100 to said first element 1a, obtaining a moulding assembly 102;
- d1) preparing a second mould 200 suitable to define the injection chamber of the remaining part 2c of said second element 1b;
- e1) arranging said moulding assembly 102 in said second mould 200 so as to define the complete injection chamber of said second element;
- f1) injecting the injection material into the complete injection chamber;
- g1) removing said first mould 100 by dissolving it in a solvent bath 400 so as to obtain the item 1 with the two elements 1a, 1b physically separated from each other, interconnected by means of two connection portions 2a, 2b mutually interpenetrating and non-removable with respect to each other.

Advantageously, in the case of items consisting of a plurality of identical elements interconnected with each other, such as for example a chain formed by links, each first mould may be structured to define two distinct injection chambers 101' and 101", intended to delimit the volume of connection portions 2b of two non-contiguous elements 1b of the item 1, which are to be connected to each other by a pre-moulded element 1a.

Advantageously, as illustrated in figure 5, in the case where the item 1 consists of a chain, the pre-moulded element is constituted by a link inside which the first mould 100 is to be inserted. As illustrated in figure 5, the pre-moulded link 1a is to be positioned astride the two injection chambers 101' and 101".

To injection mould each single link defined by two connection portions 2b and two remaining connecting portions 2c, two first moulds 100 and one second mould 200 are required, the latter being suitable to define the injection chambers of the two connecting portions 2c. The combination of the three moulds defines the complete injection chamber of the single link.

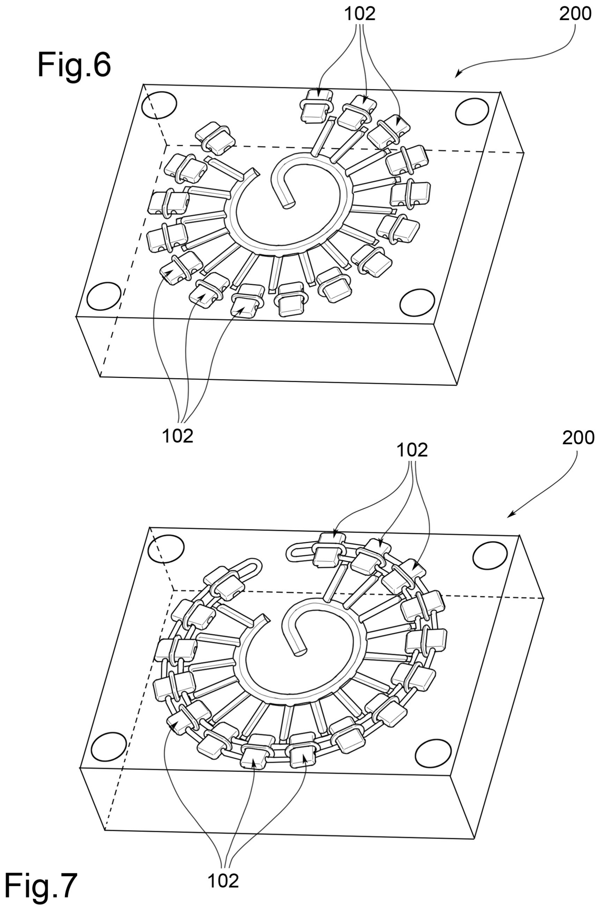

Preferably, as illustrated in figures 6 and 7, the second mould 200 defines the injection chambers of a plurality of elements and is suitable to be coupled with a plurality of first moulds.

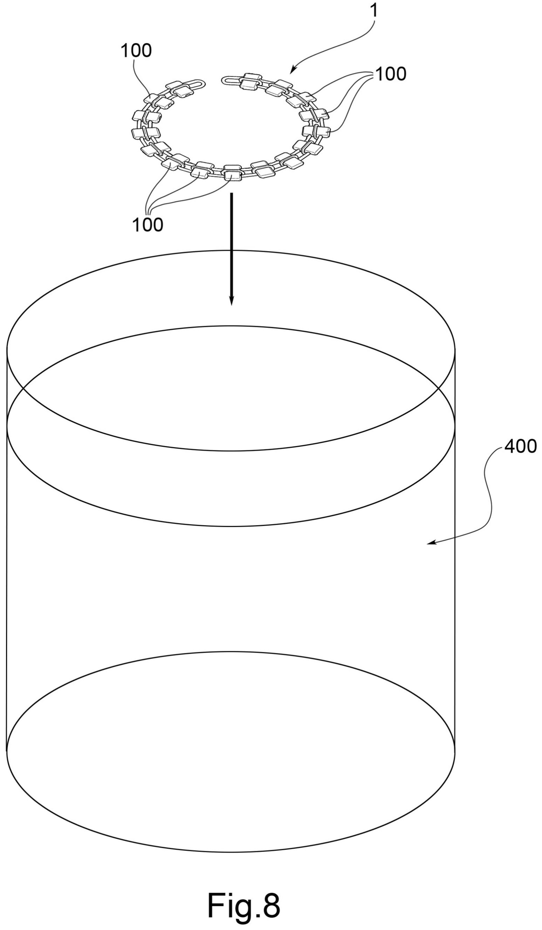

Before step g1) of removing the first mould (or the plurality of first moulds), the second mould 200 is opened and the entire item associated with the plurality of first moulds is extracted from the second mould, and then immersed in the solvent bath 400, as illustrated in figure 8. From said solvent bath 400, the item 1 is extracted, freed from the first moulds (see figure 9).

Advantageously, alternatively, said at least two elements 10a, 10b forming the item to be made may be made by co-moulding.

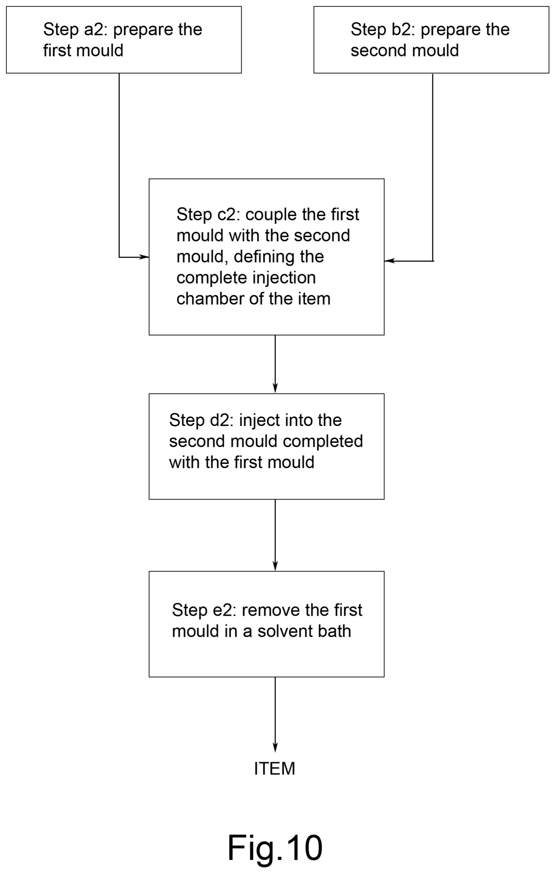

More in detail, with reference to the flow diagram of figure 10, the process may comprise the following operating steps:
- a2) preparing said first mould 110;
- b2) preparing a second mould 210 suitable to define the injection chamber of the remaining part of said second element 302 and the injection chamber of the first element 301 (see figure 11) for the part not defined by the first mould 110;
- c2) coupling said first mould 110 in said second mould 210 so as to define the complete injection chamber of said second element and the complete injection chamber of said first element, obtaining the complete injection chamber 310 of said item 10 (see figure 11);
- d2) injecting the injection material into the complete injection chamber 310 of said item 10 (see figure 12);
- e2) removing said first mould 110 by dissolving it in a solvent bath so as to obtain the item 10 with the two elements 10a and 10b physically separated from each other, interconnected by means of two connection portions 12a and 12b mutually interpenetrating and non-removable with respect to each other.

Before step e2) of removing the first mould, the second mould 210 is opened and the entire item associated with the first mould is extracted from the second mould, and then immersed in the solvent bath 400 (see figure 13). From said solvent bath 400, the item 10 is extracted, freed from the first mould (see figure 14).

Figures 11 to 14 schematically show some steps of the injection moulding process applied in the making of a buckle with pin.

As already mentioned, in the case of injection moulding using the MIM or CIM technique, the item obtained at the end of the removal of the first mould is a green piece which must be subjected to sintering.

More in detail, if the item obtained at the end of step g1) or step e2) is a green piece, the process comprises the following further operating steps:
- h1) or f2) heat treating the green piece in order to free it from the polymeric part;
- i1) or g2) subjecting the piece freed from the polymeric part to sintering.

In particular, step h1) or f2) of heat treatment may comprise the following sub-steps:
- primary debinding;
- secondary debinding.

More in detail, unlike plastic materials, the formed metallic or ceramic component requires a subsequent heat treatment to eliminate the polymeric part contained in the injected mixture (feedstock).

This entails a controlled volumetric shrinkage of the MIM / CIM components and is the reason why the mould cavities are larger than the final dimensions of the component.

To remove the primary binder, the green components are immersed in a tank containing hot water and subsequently dried in a hot air oven (this step is called primary debinding).

Preferably, this process takes place in a closed-loop system and the water is continuously recycled and reused. The primary binder is stored in appropriate tanks and then disposed of by authorised bodies in accordance with current regulations.

After the primary debinding, open porosity is formed in the structure of the component, which facilitates the complete removal of the secondary binder in the next (secondary debinding).

During secondary debinding, the components are inserted into an oven and brought to the evaporation temperature of the secondary binder, which is maintained until the binder is completely eliminated.

An inert gas is circulated inside the oven to extract the secondary binder from the pieces and carry it into special filters which trap the secondary binder, which is then disposed of by authorised bodies in accordance with current regulations.

Advantageously, the process may comprise a final surface finishing step of the item suitable for removing any traces of the injection points.

The invention allows to achieve numerous advantages, partly already described.

The injection moulding process according to the invention allows to make - in an operationally simpler way - items without welds having at least two elements physically separated from each other, interconnected by means of non-removable portions.

In particular, the removal step of the first mould is greatly simplified, which in the prior art is quite laborious and lengthy especially in the case of items formed by a plurality of elements, such as chains. This operation is also delicate because the moulds, having to be reused, must be handled with care. Differently, in the process according to the invention, the first mould is sacrificial and the operation can be carried out quickly. This feature makes the process according to the invention particularly suitable for moulding using the MIM or CIM technique, since it avoids mechanically stressing the moulded green pieces, which are fragile.

Moreover, thanks to the invention, the removal of the moulds by dissolution in solvent does not mechanically stress the moulded elements, thereby facilitating the moulding of small-sized items. Differently, in the prior art, the removal of the mould must be carried out with caution to avoid damage to the moulded piece.

In addition, since it is no longer necessary to disassemble the first mould, the latter is less complex and can be designed more simply.

Overall, the injection moulding process according to the invention allows to make items without welds having at least two elements physically separated from each other, interconnected by means of non-removable portions, in a more cost-effective manner to implement and without requiring the use of equipment more complex than that of known type.

Finally, especially for the making of items formed by a plurality of elements, such as chains for example, the process according to the invention is more easily automatable compared to known-type processes. This derives in particular from the ease and simplicity of the removal step of the first mould.

The invention thus conceived therefore achieves the intended purposes.

Obviously, in its practical implementation it may also take on forms and configurations different from those illustrated above without thereby departing from the present scope of protection.

Furthermore, all the details may be replaced by technically equivalent elements, and the dimensions, shapes and materials used may be of any type depending on requirements.

## Claims

1. Injection moulding process for making an item without welds (1; 10) having at least two elements (1a, 1b; 10a, 10b) physically separated from each other, interconnected by means of two connection portions (2a, 2b; 12a, 12b) mutually interpenetrating and non-removable with respect to each other, said process comprising the use of at least a first mould (100; 110) shaped to define with the injection chamber (101) thereof the volume corresponding to one of the two connection portions (2b; 12b), separating it with the walls thereof from the other connection portion (2a; 12a), **characterised in that** said first mould (100; 110) is made of a support material soluble in a solvent bath (400), **and in that** the injection moulding includes injecting at least into the injection chamber (101) of said first mould (100; 110) an injection material which is injectable at a temperature lower than that of decomposition of the material with which the first mould is made.

2. Process according to claim 1, wherein the support material with which the first mould (100) is made is water-soluble, and is preferably selected from the group consisting of formulations based on polyvinyl alcohol (PVA), polyethylene glycol (PEG) and polylactic acid (PLA).

3. Process according to claim 1 or 2, wherein the two elements (1a, 1b) are made by overmoulding the second element (1b) on the first pre-moulded element (1a).

4. Process according to claim 3, comprising the following operating steps:
- a1) pre-moulding a first element (1a) of said item (1) to be made;
- b1) preparing said first mould (100);
- c1) coupling said first mould (100) to said first element (1a), obtaining a moulding assembly (102);
- d1) preparing a second mould (200) suitable to define the injection chamber of the remaining part (2c) of said second element (1b);
- e1) arranging said moulding assembly (102) in said second mould (200) so as to define the injection chamber complete with said second element;
- f1) injecting the injection material into the completed injection chamber;
- g1) removing said first mould (100) by dissolving it in a solvent bath (400) so as to obtain the item (1) with the two elements (1a, 1b) physically separated from each other, interconnected by means of two connection portions (2a; 2b) mutually interpenetrating and non-removable.

5. Process according to claim 1 or 2, wherein the two elements (10a;10b) are made by co-moulding.

6. Process according to claim 5, comprising the following operating steps:
- a2) preparing said first mould (110);
- b2) preparing a second mould (210) suitable to define the injection chamber of both the remaining part of said second element, and the first element for the part not defined by the first mould 110;
- c2) coupling said first mould (110) in said second mould (210) so as to define the injection chamber completed with said second element and the injection chamber completed with said first element, obtaining the complete injection chamber (310) of said item (10);
- d2) injecting the injection material into the completed injection chamber (310) of said article (10);
- e2) removing said first mould (110) by dissolving it in a solvent bath so as to obtain the item (10) with the two elements (10a; 10b) physically separated from each other, interconnected by means of two connecting portions (12a; 12b) mutually interpenetrating and non-removable.

7. Process according to any one of the preceding claims, wherein the injection moulding includes injecting plastic material, preferably selected from the group consisting of rubbers, nylon, PMMA, polyesters having melting temperatures not higher than 200°C.

8. Process according to any one of claims 1 to 6, wherein the injection moulding includes injecting one or more polymers and one or more fillers, wherein said one or more polymers constitute the binder between the particles of said one or more fillers.

9. Process according to claim 7 or 8, when dependent on claim 4 or claim 6, wherein the item obtained at the end of step g1) or step e2) is a piece already corresponding to the finished item.

10. Process according to any one of claims 1 to 6, wherein the injection moulding includes injecting polymers and metal powders according to the metal injection moulding (MIM) technique.

11. Process according to any one of claims 1 to 6, wherein the injection moulding includes injecting polymers and ceramic powders according to the ceramic injection moulding (CIM) technique.

12. Process according to claim 10 or 11, when dependent on claim 4 or claim 6, wherein the item obtained at the end of step g1) or step e2) is a green piece and wherein the process comprises the following further operating steps:
- h1) or f2) heat treating the green piece so as to free it from the polymeric part;
- i1) or g2) subjecting the piece freed from the polymeric part to sintering.

13. Process according to any one of the preceding claims, comprising a final step of surface finishing the item, which is suitable to remove any traces of the injection points.

14. Process according to any one of the preceding claims, wherein said first mould (110) is made in one piece.

15. Process according to any one of claims 1 to 13, wherein said first mould (100) is made by the combination of two or more pieces.

16. Process according to any one of the preceding claims, wherein said item to be made consists of an assembly of two or more elements interconnected with each other in sequence, preferably identical to each other.

17. Process according to claim 16, wherein said assembly consists of a chain with closed links without welds.

18. Process according to any one of claims 1 to 15, wherein said item to be made consists of an assembly of two elements interconnected with each other.

19. Process according to claim 18, wherein said assembly consists of a buckle and relative pin connected to each other without welds.
